# EUROPÄISCHE PATENTANMELDUNG

(11) **EP 2 413 062 A2**
(43) Veröffentlichungstag der Anmeldung: **01.02.2012**
(21) Anmeldenummer: 11175181.4
(22) Anmeldetag: 25.07.2011
(51) Int. Cl.: F24J 2/36, F24J 2/52

(54) **Vorrichtung zur Energiegewinnung**

(30) Priorität: 27.07.2010 DE 202010010701 U
(71) Anmelder: FRENER & REIFER Metallbau GmbH/Srl, 39042 Brixen/Bressanone (BZ) (IT)
(72) Erfinder: Reifer, Michael, I- 39040 Vahrn (IT)
(74) Vertreter: Becker Kurig Straus

(57) **Zusammenfassung**

Vorrichtung zur Energiegewinnung, umfassend mindestens zwei plastisch verformbare Platten (110,120), welche kraftschlüssig so miteinander verbunden sind, dass sie einen dicht geschlossenen Hohlraum (200) begrenzen; mindestens einen Anschluss (130), welcher an einer der Platten angeordnet ist und die Einleitung eines Fluids in den Hohlraum (200) ermöglicht; mindestens einen Verformungsbegrenzer (210), welcher in dem Hohlraum angeordnet ist und mit mindestens einer der Platten formschlüssig und/oder kraftschlüssig verbunden ist, wobei der mindestens eine Verformungsbegrenzer (120) eingerichtet ist, um bei Vergrößerung des Hohlraums (200) die Verformung mindestens einer der Platten zu begrenzen; und mindestens ein Solarenergieelement (300), welches außerhalb des Hohlraums (200) an mindestens einer der Platten befestigt ist.

## Beschreibung

### Gebiet der Erfindung

Die vorliegende Erfindung betrifft eine Vorrichtung zur Energiegewinnung durch Nutzung von Solarenergie. Weiterhin betrifft die vorliegende Erfindung ein Kit, aus welchem die erfindungsgemäße Vorrichtung zusammengesetzt werden kann und eine Verwendungsform der erfindungsgemäßen Vorrichtung zur Energiegewinnung

### Stand der Technik

Ein wichtiger Anwendungsbereich regenerativer Energien ist die Nutzung von Solarenergie. Solarenergie (bzw. Sonnenenergie) ist die Energie, die in der Sonne durch ständige Kernfusionen entsteht und die zum Teil als elektromagnetische Strahlung auf die Erde gelangt. Bei der Nutzung dieser Energie unterscheidet man zwischen der Verwendung von Solarkollektoren, welche der Wärmegewinnung dienen und von photovoltaischen Zellen, welche Solarenergie in elektrische Energie umwandeln.

Eine unauffällige Integration von Solarzellen und Kollektoren in Dach oder Hauswand ist oft schwierig, da sich die Materialien optisch häufig stark unterscheiden. Zudem ist aufgrund von Tragfähigkeit und Verschattung von Dächern die verfügbare Fläche zur Platzierung von Solarkollektoren und photovoltaischen Zellen oftmals begrenzt.

Die Erschließung zusätzlicher Flächen ist in der Regel mit erheblichem technischem Aufwand verbunden.

Es ist daher Aufgabe der vorliegenden Erfindung, eine Vorrichtung zur Energiegewinnung durch Nutzung von Solarenergie bereitzustellen, welche die Nutzung von normalerweise unzugänglichen Flächen zur Platzierung von Solarkollektoren und photovoltaischen Zellen ermöglicht und dabei vor Ort leicht zu installieren ist. Zudem soll eine Addition von Energiegewinnungselementen durch multifunktionelle Koppelung möglich sein.

### Beschreibung der Erfindung

Diese Aufgabe wird erfindungsgemäß gelöst durch eine Vorrichtung zur Energiegewinnung, umfassend
- mindestens zwei plastisch verformbare Platten, welche kraftschlüssig so miteinander verbunden sind, dass sie einen dicht geschlossenen Hohlraum begrenzen;
- mindestens einen Anschluss, welcher an einer der Platten angeordnet ist und die Einleitung eines Fluids in den Hohlraum ermöglicht;
- mindestens einen Verformungsbegrenzer, welcher in dem Hohlraum angeordnet ist und mit mindestens einer der Platten formschlüssig und/oder kraftschlüssig verbunden ist, wobei der mindestens eine Verformungsbegrenzer eingerichtet ist, um bei Vergrößerung des Hohlraums die Verformung mindestens einer der Platten zu begrenzen; und
- mindestens ein Solarenergieelement, welches außerhalb des Hohlraums an mindestens einer der Platten befestigt ist.

Die erfindungsgemäße Vorrichtung kann hat ein geringes Volumen und kann so ausgeführt werden, dass sie zusammengefaltet, zusammengerollt oder geknickt werden kann. Dies erlaubt ihren einfachen Transport zum Einsatzort. Optional ist es auch möglich, dass das mindestens ein Solarenergieelement lösbar mit der mindestens einen Platte verbunden ist. Dies ermöglicht es, erfindungsgemäße Vorrichtungen als Kits auszuführen, wobei die Solarenenergieelemente getrennt vom Rest der Vorrichtung transportiert werden können. Dies erlaubt zum einen ein noch platzsparenderes Zusammenlegen der übrigen Vorrichtung. Zum anderen können die empfindlichen Solarenenergieelemente auf diese Weise für den Transport stoßempfindlich verpackt werden.

Am Ort ihrer Installation wird die erfindungsgemäße Vorrichtung durch Druckbeaufschlagung expandiert. Hierbei wird ein Fluid, wie beispielsweise Luft, Wasser oder eine pneumatische Flüssigkeit unter Druck durch den Anschluss in den Hohlraum gepresst. Dabei kommt es zu einer elastisch-plastischen Verformung der Platten, wobei sich der Hohlraum vergrößert. Die Expansion des Hohlraums wird schließlich durch den mindestens einen Verformungsbegrenzer gestoppt. Das Fluid kann schließlich bei Bedarf durch ein anderes Füllmaterial ausgetauscht werden. Der Anschluss wird anschließend bevorzugt mit einem Verschluss verschlossen. Die expandierte Form der erfindungsgemäßen Vorrichtung zur Energiegewinnung wird im Folgenden als ihre Verwendungsform bezeichnet.

Um einerseits eine gute Stabilität der erfindungsgemäßen Vorrichtung zu gewährleisten und andererseits sicherzustellen, dass die Platten über eine hinreichende Expandierbarkeit verfügen, sollten diese aus einem plastisch verformbaren Material bestehen, welches ein gewisses Maß an Duktitlität aufweist. Sie bestehen daher bevorzugt aus Metallblech oder aus Kunststoff. Falls es für die Platzierung der Vorrichtung notwenig ist, dass diese einen ausgeprägten Schwerpunkt an ihrer Unterseite aufweist, so kann dies erreicht werden, indem die untere Platte mit einer höheren Dicke ausgeführt wird als die obere Platte, oder indem sie aus einem Material hergestellt wird, welches eine höhere Dichte aufweist, als die obere Platte.

Die kraftschlüssige Verbindung der Platten kann beispielsweise durch Schweißen oder Kleben erfolgen. Bevorzugt erfolgt sie durch Laserschweißen oder CMT- Schweißen (Cold-Metal Transfer). CMT-Schweißen ist insbesondere dann bevorzugt, wenn eine obere und eine untere Platte aus unterschiedlichen Metallen bestehen.

Der genannte Verformungsbegrenzer kann beispielsweise im Wesentlichen eindimensional sein. Es hat dann beispielsweise die Form eines Streifens oder Kabels, der bzw. das zwischen den Platten angeordnet und an geeigneter Stellen mit diesen verbunden ist, so dass beim Expandieren des Hohlraums die räumliche Distanz der durch den Verformungsbegrenzer verbundenen Punkte der Platten nach oben begrenzt ist. Je nach Wahl des Verformungsbegrenzers, kann die Distanz der entsprechenden Punkte auch fix festgelegt werden, beispielsweise mit steifen Stäben. Ebenso ist es möglich, Verformungsbegrenzer zu verwenden, die eine zweidimensionale Formgebung aufweisen, die beim Expandieren des Hohlraums an einer bestimmten Stelle eine minimale innere Kontur vorgibt.

Sofern die erfindungsgemäße Verwendungsform mit Luft gefüllt ist, können Veränderungen der Außentemperatur zur Bildung eines Überdrucks oder Unterdrucks im Innern der Verwendungsform führen. Um eine Deformation der Verwendungsform aufgrund dieses Druckunterschieds zu verhindern, kann mindestens eine der Platten ein Überdruckventil aufweisen, welches einen Druckausgleich zwischen dem Hohlraum und der Umgebung ermöglicht, wenn der Druck im Hohlraum einen vorgegebenen Wert überschreitet. Dieser Wert sollte größer sein als der Druck, welcher zum Expandieren des Hohlraums verwendet wird, jedoch geringer als der Druck, welcher zum Bersten der Verwendungsform führen würde. Weiterhin kann mindestens eine der Platten ein Unterdruckventil aufweisen, welches einen Druckausgleich zwischen dem Hohlraum und der Umgebung ermöglicht, wenn der Umgebungsdruck den Druck im Hohlraum überschreitet. Um auf eine unnötig hohe Anzahl von Ventilen verzichten zu können, weist mindestens eine der Platten bevorzugt ein Ventil auf, welches einen Druckausgleich zwischen dem Hohlraum und der Umgebung ermöglicht, wenn der Druck im Hohlraum einen vorgegebenen Wert überschreitet oder der Umgebungsdruck den Druck im Hohlraum überschreitet.

Um der erfindungsgemäßen Verwendungsform eine erhöhte Stabilität gegenüber Druckunterschieden und von außen einwirkenden mechanischen Belastungen zu verleihen, kann der Hohlraum jedoch auch mit einem festen Füllstoff befüllt werden, beispielsweise mit Polyurethanschaum. In diesem Fall kann auf Ventile in den Platten verzichtet werden. Es ist ebenfalls möglich, dass Gewicht der Verwendungsform zu verringern, indem der Hohlraum mit einem Gas gefüllt wird, dessen Dichte geringer als die von Luft ist.

Bei dem Solarenergieelement handelt es sich um eine photovoltaische Zelle oder einen Solarkollektor. Es kann sich auch um ein Kombinationsmodul aus photovoltaischer Zelle und

Solarkollektor handeln, so dass keine Wärme ungenützt verloren geht und die elektrische Energieausbeute erhöht wird, da die photovoltaische Zelle bei geringerer Temperatur arbeiten kann.

Die photovoltaische Zelle ist bevorzugt eine kristalline Zelle oder eine Folienzelle. Der Solarkollektor ist bevorzugt ein Vakuumröhrenkollektor oder ein Blechkollektor, der beispielsweise durch Rollbonding oder Laminierung hergestellt werden kann. In einer anderen bevorzugten Ausführungsform ist der Solarkollektor ein Blechkollektor, welcher durch Druckbeaufschlagung expandiert werden kann. In dieser Ausführungsform kann eine der plastisch verformbaren Platten selbst als Blechkollektor ausgeführt werden.

Sofern das mindestens ein Solarenergieelement lösbar mit der mindestens einen Platte verbunden ist, ist es bevorzugt, dass an mindestens einer der Platten mindestens ein erstes Befestigungselement angeordnet ist, und an dem Solarenergieelement mindestens ein zweites Befestigungselement angeordnet ist, welches mit dem ersten Befestigungselement verbunden werden kann. Das erste und das zweite Befestigungselement können beispielsweise ein Clip und eine Gegenclip sein.

Um eine möglichst große Fläche zur Energiegewinnung nutzen zu können, ist es möglich, mehrere Verwendungsformen der erfindungsgemäßen Vorrichtung zur Energiegewinnung zu einem Energiegewinnungscluster zu verbinden. Ein Energiegewinnungscluster umfasst mindestens zwei Verwendungsformen der erfindungsgemäßen Vorrichtung zur Energiegewinnung und mindestens ein Verbindungselement. Das Verbindungselement umfasst eine mechanische Koppelung der Verwendungsformen, um zu verhindern, dass diese durch äußere Einflüsse ihre Position ändern. Weiterhin umfasst das Verbindungselement eine thermohydraulische Koppelung (zwischen Solarkollektoren) und/oder eine elektrische Koppelung (zwischen photovoltaischen Zellen) der Solarenergieelemente der Verwendungsformen, um die gewonnene Wärme bzw. elektrische Energie abgreifen zu können, ohne eine Energieleitung zu jedem einzelnen Solarenergieelement zu benötigen.

Die erfindungsgemäße Vorrichtung bzw. Verwendungsform ist herstellbar indem mindestens zwei plastisch verformbaren Platten bereitgestellt werden, die kraftschlüssig so miteinander verbunden sind, so dass sie geeignet sind einen dicht geschlossenen Hohlraum zu begrenzen. An einer der Platten ist mindestens ein Anschluss angeordnet, der zur Einleitung eines Fluids in den Hohlraum ist vorgesehen. In dem Hohlraum ist ferner mindestens ein Verformungsbegrenzer angeordnet, der mit mindestens einer der Platten formschlüssig und/oder kraftschlüssig verbunden ist. Der mindestens eine Verformungsbegrenzer ist eingerichtet, um bei Vergrößerung des Hohlraums eine Verformung der mindestens einen der Platten zu begrenzen. Weiterhin wird mindestens ein Solarenergieelement an mindestens einer der Platten außerhalb des Hohlraums befestigt. Die Vorrichtung wird anschließend mit Druck beaufschlagt indem ein Fluid unter Druck durch den Anschluss in den Hohlraum eingeleitet wird bis die Expansion des Hohlraums durch den mindestens einen Verformungsbegrenzer gestoppt wird.

### Kurze Beschreibung der Zeichnungen

Figur 1 zeigt einen Querschnitt einer Ausführungsform einer erfindungsgemäßen Vorrichtung zur Energiegewinnung.
Figur 2 zeigt einen Querschnitt einer ersten Ausführungsform einer Verwendungsform der erfindungsgemäßen Vorrichtung zur Energiegewinnung, welche aus der Vorrichtung gemäß Figur 1 hergestellt wurde.
Figur 3 zeigt einen Querschnitt einer zweiten Ausführungsform einer Verwendungsform der erfindungsgemäßen Vorrichtung zur Energiegewinnung, welche schwimmfähig ist.
Figur 4 zeigt einen Querschnitt einer dritten Ausführungsform einer Verwendungsform der erfindungsgemäßen Vorrichtung zur Energiegewinnung, welche frei schweben kann.
Figur 5 zeigt einen Querschnitt einer vierten Ausführungsform einer Verwendungsform der erfindungsgemäßen Vorrichtung zur Energiegewinnung.
Figur 6 zeigt eine Aufsicht auf die vierte Ausführungsform einer Verwendungsform der erfindungsgemäßen Vorrichtung zur Energiegewinnung.
Figur 7 zeigt einen Cluster von Verwendungsformen der erfindungsgemäßen Vorrichtung zur Energiegewinnung.

Die folgenden Beispiele sollen die vorliegende Erfindung weiter verdeutlichen, ohne sie dabei einzuschränken.

### Beispiele

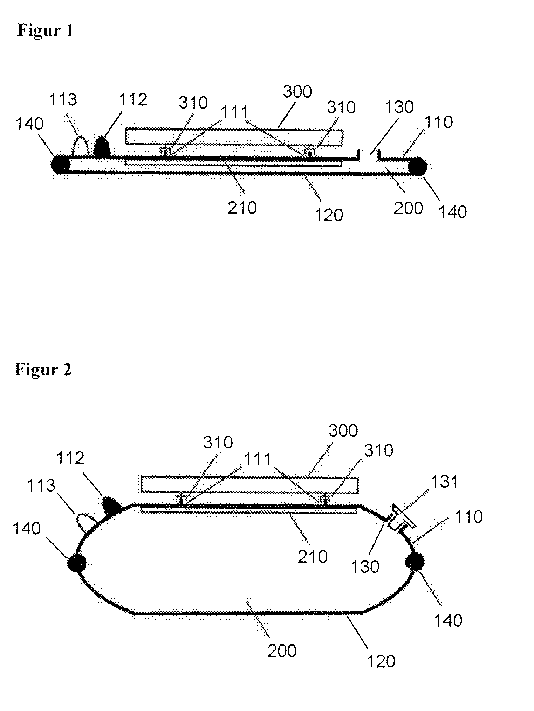

Ein Ausführungsbeispiel der erfindungsgemäßen Vorrichtung zur Energiegewinnung wird in Figur 1 gezeigt. Hierin sind auf einer ersten Blechplatte (110), welche aus Rohblech ausgestanzt wurde, zwei Gegenclips als erste Befestigungselemente (111) aufgeschweißt. Weiterhin sind in die erste Blechplatte (110) ein Überdruckventil (112) und ein Unterdruckventil (113) eingelassen. Die erste Blechplatte (110) ist kraftschlüssig mit einer zweiten Blechplatte (120) verbunden. Diese Verbindung wurde erreicht, indem die beiden Platten (110, 120) an ihren Ränder durch Laserschweißen miteinander verbunden wurden, so dass sich Laserschweißnähte als Verbindungsnähte (140) gebildet haben. Die beiden Platten (110, 120) begrenzen einen Hohlraum (200). Ein Anschluss (130) in der ersten Platte (110) ermöglicht das Einführen von Fluiden in den Hohlraum (200). Der Hohlraum (200) enthält ein Verformungsbegrenzer (210) in Form eines Streifens, welcher im rechten Winkel zu den beiden dargestellten Verbindungsnähten (140) an der ersten Platte (110) angeordnet ist. Auf der ersten Platte (110) ist ein Solarkollektor als Solarelement (300) lösbar befestigt, indem er mit an seiner Unterseite befestigten Clips als zweiten Befestigungselementen (310) auf die Gegenclips (111) auf der ersten Platte (110) aufgesteckt ist.

Die erfindungsgemäße Vorrichtung zur Energiegewinnung wird durch Druckbeaufschlagung expandiert, um die Verwendungsform der Vorrichtung zur Energiegewinnung zu erhalten. Hierbei wird Druckluft unter einem Druck von mindestens 50 kPa bis zu 1 MPa durch den Anschluss (130) in den Hohlraum (200) gepresst. Dabei kommt es zu einer plastischen Verformung der Platten (110, 120), wobei sich der Hohlraum (200) vergrößert. Die Expansion des Hohlraums wird durch den Verformungsbegrenzer (210) gestoppt, so dass der Teil der Platte (110), auf welcher der Solarkollektor (300) befestigt ist, sich nicht verformt und die Befestigung des Solarkollektors (300) somit keiner Belastung ausgesetzt wird. Nachdem die Expansion abgeschlossen ist, wird der Überdruck aus dem Hohlraum (200) abgelassen und der Anschluss (130) mit einem Verschluss (131) verschlossen. Eine erste Ausführungsform der Verwendungsform der Vorrichtung zur Energiegewinnung, welche auf diese Weise erhalten wird, ist in Figur 2 dargestellt.

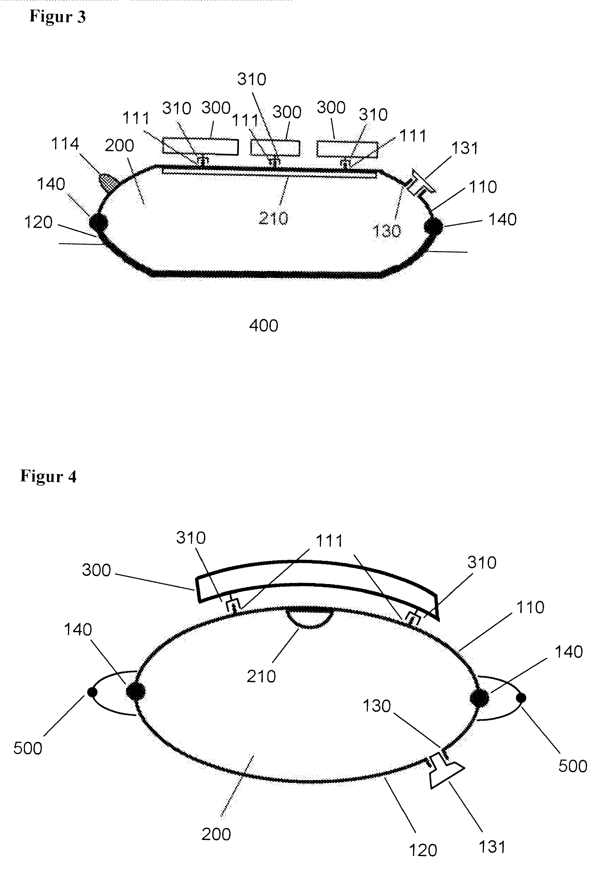

Figur 3 zeigt eine zweite Ausführungsform einer Verwendungsform der erfindungsgemäßen Vorrichtung zur Energiegewinnung, welche schwimmfähig ist. Diese besteht aus einer dünnen Blechplatte (110), welche als Oberseite der Verwendungsform fungiert und eine dickere Blechplatte (120) welche durch ihr höheres Gewicht als Kiel der Verwendungsform fungiert. Das Überdruckventil (112) und das Unterdruckventil (113) der ersten Ausführungsform wurden durch ein einziges Ventil (114) ersetzt, welches einen Druckausgleich zwischen dem Hohlraum (200) und der Umgebung ermöglicht, wenn der Druck im Hohlraum (200) einen vorgegebenen Wert überschreitet oder der Umgebungsdruck den Druck im Hohlraum (200) überschreitet. Anstatt des Solarkollektors der ersten Ausführungsform werden drei photovoltaische Zellen als Solarelemente (300) verwendet. Diese sind jeweils auf ein Blech (nicht gezeigt) auflaminiert, auf welches die Clips (310) aufgeschweißt sind.

Diese Verwendungsform der erfindungsgemäßen Vorrichtung zur Energiegewinnung ermöglicht es, Wasserflächen (400), beispielsweise von Teichen, zur Platzierung von photovoltaischen Zellen zu nutzen. Die gewonnene elektrische Energie kann dann mittels Kabeln (nicht gezeigt) ans Ufer geleitet werden.

Figur 4 zeigt eine dritte Ausführungsform einer Verwendungsform der erfindungsgemäßen Vorrichtung zur Energiegewinnung, welche frei schweben kann. Auf einer ersten Kunststoffplatte (110) sind zwei Gegenclips als erste Befestigungselemente (111) aufgeklebt. Die erste Kunststoffplatte (110) ist an ihren Rändern mit einer zweiten Kunststoffplatte (120) verklebt. Ein Anschluss (130) in der zweiten Platte (120) ermöglicht das Einführen von Fluiden in einen Hohlraum (200) zwischen den beiden Platten (110, 120). Er ist mit einem Verschluss (131) verschlossen. Der Hohlraum (200) enthält einen Verformungsbegrenzer (210) in Form eines Streifens, welcher parallel zu den beiden dargestellten Verbindungsnähten (140) an der ersten Platte (110) angeordnet ist. Auf der ersten Platte (110) ist ein Solarkollektor als Solarelement (300) lösbar befestigt, indem er mit an seiner Unterseite befestigten Clips als zweite Befestigungselemente (310) an den Gegenclips (111) auf der ersten Platte (110) aufgesteckt ist. Das Solarelement (300) hat einen gebogenen Querschnitt, welcher der Biegung der ersten Platte (110) entspricht. Die Vorrichtung zur Energiegewinnung welche zu dieser Verwendungsform expandiert werden kann, wird als Kit ausgeliefert, worin der Solarkollektor (300) noch von der ersten Platte (110) getrennt ist. Erst nach dem Expandieren des Hohlraums (200) hat sich die erste Platte (110) so verformt, dass ein Aufstecken des Solarkollektors (300) möglich ist.

Diese Verwendungsform der erfindungsgemäßen Vorrichtung zur Energiegewinnung kann freischwebend zwischen Seilen eingespannt werden. Hierzu sind in der Nähe der Verbindungsnähte (140) Tragelemente (500) an den Platten (110, 120) angebracht, welche eine Befestigung der erfindungsgemäßen Verwendungsform ermöglichen. Um das Gewicht dieser Verwendungsform zu verringern wurde ihr Hohlraum (200) mit Helium gefüllt, dessen Dichte geringer ist, als die von Luft. Es ist beispielsweise möglich, mehrere dieser Verwendungsformen der erfindungsgemäßen Vorrichtung zur Energiegewinnung in Seilverspannungen über einer Mülldeponie zu befestigen, um deren Fläche zur Energiegewinnung nutzen zu können. Die gewonnene Energie wird über Leitungen (nicht gezeigt) zum Boden geleitet.

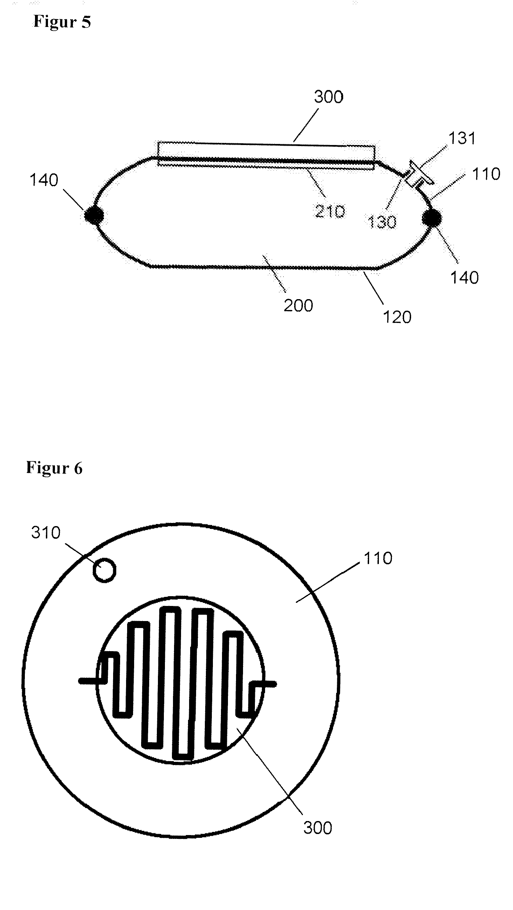

Die Figuren 5 und 6 zeigen eine vierte Ausführungsform einer Verwendungsform der erfindungsgemäßen Vorrichtung zur Energiegewinnung. Diese besteht aus einer ersten Blechplatte (110), welche als Solarkollektor (300) ausgeführt ist und einer zweiten Blechplatte (120). Nicht nur der Hohlraum (200) der Verwendungsform selbst, sondern auch das Rohr des Blechkollektors (300) wurde durch Druckbeaufschlagung expandiert. Diese Ausführungsform der Erfindung ist vor ihrer Expansion zur Verwendungsform besonders platzsparend, da die Notwendigkeit entfällt, einen voluminösen Solarkollektor zu transportieren.

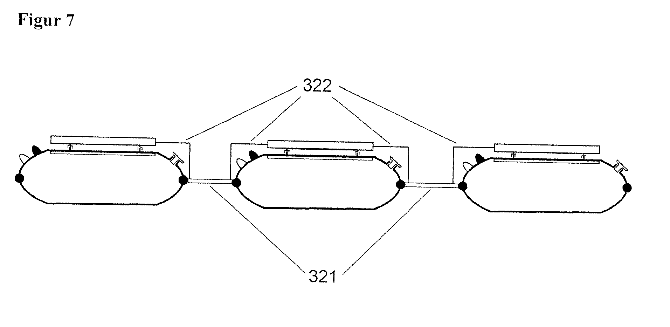

Figur 7 zeigt einen erfindungsgemäßen Energiegewinnungscluster. Dieser besteht aus drei Verwendungsformen der erfindungsgemäßen Vorrichtung zur Energiegewinnung gemäß der ersten Ausführungsform (siehe Figur 2) und zwei Verbindungselementen (320). Die Verbindungselemente (320) umfassen mechanische Koppelungen (321) der Verwendungsformen sowie thermohydraulische Koppelungen (322) der Solarkollektoren (300) der Verwendungsformen. Ein erfindungsgemäßer Energiegewinnungscluster kann theoretisch unbegrenzt viele Verwendungsformen der erfindungsgemäßen Vorrichtung zur Energiegewinnung umfassen, so dass eine große Fläche zur Energiegewinnung genutzt werden kann.

### Bezugszeichenliste

- 110:: erste Platte
- 111:: erste Befestigungselemente
- 112:: Überdruckventil
- 113:: Unterdruckventil
- 114:: Ventil
- 120:: zweite Platte
- 130:: Anschluss
- 131:: Verschluss
- 140:: Verbindungsnaht
- 200:: Hohlraum
- 210:: Verformungsbegrenzer
- 300:: Solarenergieelement
- 310:: zweite Befestigungselemente
- 320:: Verbindungselement
- 321:: mechanische Kopplung
- 322:: thermohydraulische Kopplung
- 400:: Wasser
- 500:: Tragelemente

## Patentansprüche

1. Vorrichtung zur Energiegewinnung, umfassend
- mindestens zwei plastisch verformbare Platten (110, 120), welche kraftschlüssig so miteinander verbunden sind, dass sie einen dicht geschlossenen Hohlraum (200) begrenzen;
- mindestens einen Anschluss (130), welcher an einer der Platten (110, 120) angeordnet ist und die Einleitung eines Fluids in den Hohlraum (200) ermöglicht;
- mindestens einen Verformungsbegrenzer (210), welcher in dem Hohlraum (200) angeordnet ist und mit mindestens einer der Platten (110, 120) formschlüssig und/oder kraftschlüssig verbunden ist, wobei der mindestens eine Verformungsbegrenzer (210) eingerichtet ist, um bei Vergrößerung des Hohlraums (200) die Verformung mindestens einer der Platten (110, 120) zu begrenzen; und
- mindestens ein Solarenergieelement (300), welches außerhalb des Hohlraums (200) an mindestens einer der Platten (110, 120) befestigt ist.

2. Vorrichtung nach Anspruch 1, **dadurch gekennzeichnet, dass** die Platten (110, 120) jeweils aus Metallblech bestehen.

3. Vorrichtung nach Anspruch 1, **dadurch gekennzeichnet, dass** die Platten (110, 120) jeweils aus Kunststoff bestehen.

4. Vorrichtung nach einem der Ansprüche 1 bis 3, **dadurch gekennzeichnet, dass** die Platten (110, 120) durch Schweißen oder Kleben kraftschlüssig miteinander verbunden sind.

5. Vorrichtung nach einem der Ansprüche 1 bis 4, **dadurch gekennzeichnet, dass** mindestens eine der Platten (110, 120) ein Überdruckventil (112) aufweist, welches einen Druckausgleich zwischen dem Hohlraum (200) und der Umgebung ermöglicht, wenn der Druck im Hohlraum (200) einen vorgegebenen Wert überschreitet.

6. Vorrichtung nach einem der Ansprüche 1 bis 5, **dadurch gekennzeichnet, dass** mindestens eine der Platten (110, 120) ein Unterdruckventil (113) aufweist, welches einen Druckausgleich zwischen dem Hohlraum (200) und der Umgebung ermöglicht, wenn der Umgebungsdruck den Druck im Hohlraum (200) überschreitet.

7. Vorrichtung nach einem der Ansprüche 1 bis 4, **dadurch gekennzeichnet, dass** mindestens eine der Platten (110, 120) ein Ventil (114) aufweist, welches einen Druckausgleich zwischen dem Hohlraum (200) und der Umgebung ermöglicht, wenn der Druck im Hohlraum (200) einen vorgegebenen Wert überschreitet oder wenn der Umgebungsdruck den Druck im Hohlraum (200) überschreitet.

8. Vorrichtung nach einem der Ansprüche 1 bis 7, **dadurch gekennzeichnet, dass** das mindestens eine Solarenergieelement (300), lösbar an mindestens einer der Platten (110, 120) befestigt ist.

9. Vorrichtung nach Anspruch 8, **dadurch gekennzeichnet, dass** an mindestens einer der Platten (110, 120) mindestens ein erstes Befestigungselement (111) angeordnet ist, und an dem Solarenergieelement (300) mindestens ein zweites Befestigungselement (310) angeordnet ist, welches mit dem ersten Befestigungselement verbunden werden kann.

10. Vorrichtung nach einem der Ansprüche 1 bis 7, **dadurch gekennzeichnet, dass** mindestens eine der Platten (110, 120) als Blechkollektor ausgeführt ist welcher durch Druckbeaufschlagung expandiert werden kann.

11. Kit, umfassend
a) eine Vorrichtung, umfassend
- mindestens zwei verformbare Platten (110, 120), welche kraftschlüssig so miteinander verbunden sind, dass sie einen dicht geschlossenen Hohlraum (200) begrenzen;
- mindestens einen Anschluss (130), welcher an einer der Platten (110, 120) angeordnet ist und die Einleitung eines Fluids in den Hohlraum (200) ermöglicht;
- mindestens einen Verformungsbegrenzer (210), welcher in dem Hohlraum (200) angeordnet ist und mit mindestens einer der Platten (110, 120) formschlüssig und/oder kraftschlüssig verbunden ist, wobei der mindestens eine Verformungsbegrenzer (210) eingerichtet ist, um bei Vergrößerung des Hohlraums (200) die Verformung mindestens einer der Platten (110, 120) zu begrenzen; und
- mindestens eine Befestigungsvorrichtung (310), welche außerhalb des Hohlraums (200) an mindestens einer der Platten (110, 120) befestigt ist; und
b) mindestens ein Solarenergieelement (300), welches eingerichtet ist, um an der Befestigungsvorrichtung (310) befestigt zu werden.

12. Verwendungsform der Vorrichtung zur Energiegewinnung nach einem der Ansprüche 1 bis 10, herstellbar durch Druckbeaufschlagung einer Vorrichtung nach einem der Ansprüche 1 bis 10, indem ein Fluid solange unter Druck durch den Anschluss (130) in den Hohlraum (200) eingeleitet wird, bis die Expansion des Hohlraums durch den mindestens einen Verformungsbegrenzer (210) gestoppt wird.

13. Verwendungsform nach Anspruch 12, **dadurch gekennzeichnet, dass** der Anschluss (130) durch einen Verschluss (131) verschlossen ist.

14. Energiegewinnungscluster, umfassend mindestens zwei Verwendungsformen nach Anspruch 12 oder 13 und mindestens ein Verbindungselement (320), welches eine mechanische Koppelung (321) der Verwendungsformen sowie eine thermohydraulische und/oder elektrische Koppelung (322) der Solarenergieelemente (300) der Verwendungsformen umfasst.

15. Verfahren zur Herstellung einer Vorrichtung zur Energiegewinnung nach einem der Ansprüche 1 bis 10, umfassend:
- Bereitstellen von mindestens zwei plastisch verformbaren Platten (110, 120), welche kraftschlüssig so miteinander verbunden sind, so dass sie geeignet sind einen dicht geschlossenen Hohlraum (200) zu begrenzen,
wobei an einer der Platten (110, 120) mindestens ein Anschluss (130) angeordnet ist, wobei der Anschluss (130) zur Einleitung eines Fluids in den Hohlraum (200) vorgesehen ist,
wobei in dem Hohlraum (200) mindestens ein Verformungsbegrenzer (210) angeordnet ist, der mit mindestens einer der Platten (110, 120) formschlüssig und/oder kraftschlüssig verbunden ist, wobei der mindestens eine Verformungsbegrenzer (210) eingerichtet ist, um bei Vergrößerung des Hohlraums (200) eine Verformung der mindestens einen der Platten (110, 120) zu begrenzen;
- Befestigen von mindestens einem Solarenergieelement (300) an mindestens einer der Platten (110, 120) außerhalb des Hohlraums (200); und
- Druckbeaufschlagen der Vorrichtung durch Einleiten eines Fluids unter Druck durch den Anschluss (130) in den Hohlraum (200) bis die Expansion des Hohlraums durch den mindestens einen Verformungsbegrenzer (210) gestoppt wird.

16. Verfahren nach Anspruch 16, ferner umfassend:
- kraftschlüssig Verbinden der zwei plastisch verformbaren Platten (110, 120), durch Schweißen oder Kleben.

17. Verfahren nach Anspruch 15 oder 16, ferner umfassend:
- Begrenzen des Drucks in dem Hohlraum (200) durch Vorsehen eines Überdruckventils (112) in einer der Platten (110, 120) indem das Überdruckventil (112) einen Druckausgleich zwischen dem Hohlraum (200) und der Umgebung ermöglicht, wenn der Druck im Hohlraum (200) einen vorgegebenen Wert überschreitet.

18. Verfahren nach einem der Ansprüche 15 bis 17, ferner umfassend:
- Ausgleichen des Drucks in dem Hohlraum (200) durch Vorsehen eines Unterdruckventils (113) in einer der Platten (110, 120) indem das Unterdruckventils (113) einen Druckausgleich zwischen dem Hohlraum (200) und der Umgebung ermöglicht, wenn der Umgebungsdruck den Druck im Hohlraum (200) überschreitet.

19. Verfahren nach einem der Ansprüche 15 bis 18, wobei das Befestigen der mindestens einem Solarenergieelement (300) an mindestens einer der Platten (110, 120) außerhalb des Hohlraums (200) ein lösbares Befestigen umfasst.
